# EUROPEAN PATENT APPLICATION

(11) **EP 3 965 444 A1**
(43) Date of publication of application: **09.03.2022**
(21) Application number: 19942859.0
(22) Date of filing: 23.08.2019
(51) Int. Cl.: H04W 4/70, H04W 72/02

(54) **DEVICE DISCOVERY METHOD, TERMINAL DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Zhi, Dongguan, Guangdong 523860 (CN)
(74) Representative: Novagraaf Technologies
(86) International application number: PCT/CN2019/102350
(87) International publication number: WO 2021/035443

(57) **Abstract**

Disclosed is a device discovery method, comprising: a terminal device sending a target sequence on a first time-frequency resource by means of a first antenna port, wherein the target sequence is used for implementing D2D discovery; and the terminal device detecting, while sending the target sequence, a first sequence on the first time-frequency resource by means of a second antenna port, wherein the first sequence and the target sequence are sequences, having autocorrelation and cross-correlation attributes, in a first sequence group. Also disclosed are a terminal device and a storage medium.

## Description

### TECHNICAL FIELD

The present application relates to the field of wireless communication technology, and more particularly, to a device discovery method, a terminal device and a storage medium.

### BACKGROUND

In related art, the number of terminal devices included in a Device to Device (D2D) system is generally unknown, therefore, it is not guaranteed that each of D2D terminal devices can be discovered by each other.

### SUMMARY

In order to solve the above technical problem, the embodiments of the present application provide a device discovery method, a terminal device and a storage medium, which can guarantee that each of D2D terminal devices in a D2D system can be discovered by each other.

In a first aspect, the embodiments of the present application provide a device discovery method, including: sending, by a terminal device, a target sequence on a first time-frequency resource via a first antenna port, where the target sequence is used for implementing Device to Device (D2D) discovery; and
detecting, by the terminal device, a first sequence on the first time-frequency resource via a second antenna port while sending the target sequence, where the first sequence and the target sequence are sequences having autocorrelation and cross-correlation attributes in a first sequence group.

In a second aspect, the embodiments of the present application provide a terminal device, including: a sending unit, configured to send a target sequence on a first time-frequency resource via a first antenna port, where the target sequence is used for implementing Device to Device (D2D) discovery; and
a processing unit, configured to detect a first sequence on the first time-frequency resource via a second antenna port while sending the target sequence, where the first sequence and the target sequence are sequences having autocorrelation and cross-correlation attributes in a first sequence group.

In a third aspect, the embodiments of the present application provide a terminal device, including: a processor and a memory for storing a computer program capable of running on the processor, where the processor is configured to execute steps of the device discovery method executed by the above terminal device when running the computer program.

In a fourth aspect, the embodiments of the present application provide a storage medium storing an executable program, where the device discovery method executed by the above terminal device is implemented when the executable program is executed by a processor.

The device discovery method provided by the embodiments of the present application includes: sending, by a terminal device, a target sequence on a first time-frequency resource via a first antenna port, where the target sequence is used for implementing Device to Device (D2D) discovery; and detecting, by the terminal device a first sequence on the first time-frequency resource via a second antenna port while sending the target sequence, where the first sequence and the target sequence are sequences having autocorrelation and cross-correlation attributes in a first sequence group. Since the terminal device detects the target sequence on the same time-frequency resource while sending the target sequence by means of two different antenna ports, that is, the terminal device performs device discovery based on full-duplex technology; it could be guaranteed that each D2D terminal device can be discovered by each other. Moreover, when using the full-duplex technology for a D2D channel reservation, it can avoid potential conflict and waste of resources caused by monitoring a channel between D2D devices.

### BRIEF DESCRIPTION OF THE DRAWINGS

FIG. 1 is a schematic diagram of a composition structure of a communication system according to an embodiment of the application;
FIG. 2 is a schematic diagram of a processing flow of a device discovery method according to an embodiment of the application;
Figure 3 is a processing flow of a channel reservation by a terminal device according to an embodiment of the application;
FIG. 4 is a schematic diagram of a composition structure of a terminal device according to an embodiment of the application; and
FIG. 5 is a schematic diagram of a hardware composition structure of a terminal device according to an embodiment of the application.

### DETAILED DESCRIPTION

In order to have a more detailed understanding of the characteristics and technical content of the embodiments of the present application, the implementation of the embodiments of the present application will be described in detail below in combination with the drawings. The attached drawings are for reference and explanation purposes only, and are not used to limit the embodiments of the present application.

Before describing a device discovery method provided in the embodiments of the present application in detail, a brief description of D2D communication in the related art will be given first.

In the related art, since a sending signal and a receiving signal are symmetrical in the D2D communication, that is, the sending signal of one terminal device is the receiving signal of another terminal device. When using a Time Division Duplexing (TDD) mode for the D2D communication, some sending signals and receiving signals may be processed by a common processing unit, so as to achieve a purpose of simplifying a design of a transmitter and/or a receiver.

In a D2D system, D2D discovery is one basic function of the terminal device. The D2D discovery means that one D2D terminal device learns the existence of another D2D terminal device nearby. A procedure of the D2D discovery is as follows: one D2D terminal device sends one discovery signal or message, and when the discovery signal or message is detected by other D2D terminal device, this D2D terminal device is discovered by other terminal device.

When performing the D2D discovery based on the TDD mode, sending signal and receiving signal of one D2D terminal device are performed separately. For the procedure of the D2D discovery, when there are more than two D2D terminal devices in one D2D system, it is necessary to reasonably plan signal receiving and sending moments of the D2D terminal devices. Examples are given below. For a D2D system including two terminal devices, at a moment T1, a first terminal device sends a discovery signal, and a second terminal device monitors the signal; and at a moment T2, the second terminal device sends a discovery signal, and the first terminal device monitors the signal. For a D2D system including 4 terminal devices, it is necessary to plan the signal receiving and sending moments of 4 D2D devices. At a moment T1, a first terminal device and a second terminal device send the discovery signal, and a third terminal device and a fourth terminal device monitor the signal; at a moment T2, the third terminal device and the fourth terminal device send the discovery signal, and the first terminal device and the second terminal device monitor the signal; at a moment T3, the first terminal device and the third terminal device send the discovery signal, and the second terminal device and the fourth terminal device monitor the signal; and at a moment T4, the second terminal device and the fourth terminal device send the discovery signal, and the first terminal device and the third terminal device monitor the signal. Therefore, for a system including 2^{∗}N D2D terminal devices, in order to ensure that each pair of terminal devices discover each other, a total of 2^{∗}N receiving and sending moments of the D2D discovery are required. In actual environment, a total number of terminals included in one D2D system is often unknown, and there is no central node that can reasonably schedule the receiving and sending moments of the discovery. Therefore, in one D2D system, it is impossible to ensure that individual D2D terminal devices can be discovered by each other.

In the D2D system, the D2D terminal device needs to reserve a channel before sending data; the reserved channel will be used by the reserving D2D terminal device, which can avoid a problem of a channel preemption or a channel conflict between the D2D terminal devices. There are two ways to reserve the channel, one is Listen Before Talk (LBT); and the other is a token ring. For reserving the channel using the LBT, before sending a signal, the channel is monitored for a period of time, and only when no other terminal device uses the monitored channel, the channel is reserved. For reserving a channel using the token ring, it is a rotation mechanism. A right to occupy the channel (that is, an opportunity to send a signal) is used in turn among all D2D terminal devices, and only one terminal device (the terminal device that gets the token) can occupy the channel at each moment.

When using the LBT to reserve the channel, if more than two terminal devices monitor the channel at the same time, it is impossible to avoid a channel preemption conflict between the terminal devices. When using the token ring to reserve the channel, all the terminal devices need to be discovered by each other. Once not all the terminal devices are allocated with the token ring, the conflict may occur. In addition, when using the token ring to reserve the channel, the token ring is required to poll among all the terminal devices. When some terminal devices get the token ring but no data is occurred, resources will be wasted; therefore, when more terminal devices are used, system delay is large, and waste of resources is also serious.

Duplex technology will be briefly described below.

At present, the full-duplex technology includes the TDD and Frequency Division Duplexing (FDD). For the D2D communication using the TDD, receiving signal and sending signal are not performed at the same time; and for the D2D communication using the FDD, receiving signal and sending signal are performed at the same time, but on different frequency bands. In the full-duplex technology, a transceiver of the terminal device has two separate antennas, one is for sending signal and the other is for receiving signal; and there is a negative feedback path from the antenna for sending signal to the antenna for receiving signal, through the negative feedback path, the signals sent by the transceiver itself are eliminated at a receiving end so as to realize simultaneous receiving and sending of the transceiver at the same frequency; therefore, the full-duplex technology can improve a spectrum utilization.

Although the full-duplex technology can improve the spectrum utilization, a difficulty of a self-interference elimination is very high; especially when an intensity of the sending signal of the transmitter itself is much stronger than that of the receiving signal, a highly complex interference elimination method is required.

Based on the above problems, the present application provides a device discovery method. The device discovery method in the embodiments of the present application may be applied to various communication systems, such as a Global System of Mobile communication (GSM) system, a Code Division Multiple Access (CDMA) system, a Wideband Code Division Multiple Access (WCDMA) system, General Packet Radio Service (GPRS), a Long Term Evolution (LTE) system, LTE Time Division Duplex (TDD), a Universal Mobile Telecommunication System (UMTS), a Worldwide Interoperability for Microwave Access (WiMAX) communication system, or a 5G system, etc.

In the embodiments of the present application, the terminal device may be any terminal. For example, the terminal device may be a user equipment for machine type communication. In other words, the terminal device may also be referred to as the user equipment (UE), a mobile station (MS), a mobile terminal, a terminal, etc. And the terminal device may communicate with one or more core network via radio access network (RAN). For example, the terminal device may be a mobile phone (or referred to as a "cellular" phone), a computer with a mobile terminal, etc. For example, the terminal device may also be a portable, pocket, handheld, computer built-in or in-vehicle mobile apparatus, which exchanges language and/or data with the wireless access network, which is not specifically limited in the embodiments of the present application.

Optionally, a network device and the terminal device may be deployed on land, including indoor or outdoor, handheld or in-vehicle; they may also be deployed on water; and they may also be deployed on aircraft, balloons and satellites in the air. The embodiments of the present application do not limit application scenarios of the network device and the terminal device.

Optionally, communication between the network device and the terminal device and communication between the terminal device and the terminal device may be performed by means of a licensed spectrum, or by means of an unlicensed spectrum, or by means of both the licensed spectrum and the unlicensed spectrum at the same time. The communication between the network device and the terminal device and the communication between the terminal device and the terminal device may be performed by means of a spectrum below 7 gigahertz (GHz), or by means of a spectrum above 7 GHz, or by means of both the spectrum below 7 GHz and the spectrum above 7 GHz at the same time. The embodiments of the present application do not limit spectrum resources used between the network device and the terminal device.

Generally speaking, the number of connections supported by the conventional communication system is limited and the implementation is easy. However, with a development of communication technology, a mobile communication system will not only support the traditional communication, but also support, for example, device to device (D2D) communication, machine to machine (M2M) communication, machine type communication (MTC), and vehicle to vehicle (V2V) communication, etc. The embodiments of the present application may also be applied to these communication systems.

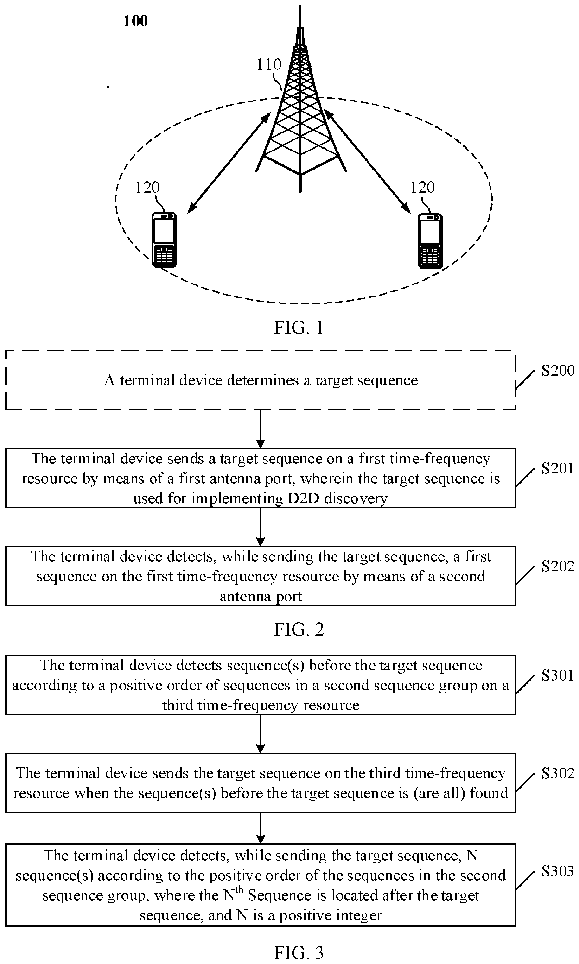

Exemplarily, a communication system 100 applied in the embodiments of the present application is shown in FIG. 1. The communication system 100 may include a network device 110, which may be a device communicating with a terminal device 120 (or referred to as a communication terminal or a terminal). The network device 110 may provide communication coverage for a specific geographic area, and may communicate with the terminal device located in this coverage area. Optionally, the network device 110 may be a Base Transceiver Station (BTS) in the GSM system or the CDMA, and may also be a NodeB (NB) in the WCDMA system, and may also be an Evolutional Node B (eNB or eNodeB) in a LTE system, or a wireless controller in Cloud Radio Access Network (CRAN), or the network device may be a mobile switch center, a relay station, an access point, an in-vehicle device, a wearable device, a hub, a switch, a bridge, a router, a network-side device in 5G network or a network device in future evolved Public Land Mobile Network (PLMN), etc.

The communication system 100 also includes at least one terminal device 120 located within the coverage area of the network device 110. As the "terminal device" used herein, it includes, but is not limited to, a connection via a wired line, such as via Public Switched Telephone Networks (PSTN), a Digital Subscriber Line (DSL), a digital cable, a direct cable connection; and/or another data connection/network; and/or via a wireless interface, for example, a transmitter for a cellular network, a Wireless Local Area Network (WLAN), a digital TV network such as a DVB-H network, a satellite network and an AF-FM broadcast; and/or an apparatus of another terminal device which is arranged to receive/send communication signals; and/or an Internet of Things (IoT) device. The terminal device arranged to communicate via the wireless interface may be referred to as a "wireless communication terminal", a "wireless terminal" or a "mobile terminal". Examples of the mobile terminal include, but are not limited to, a satellite or cellular phone; a Personal Communications System (PCS) terminal that may combine a cellular wireless phone with data procedure, fax and data communication capabilities; a PDA that may include a radio phone, a pager, an Internet/intranet access, a Web browser, a memo pad, a calendar, and/or a Global Positioning System (GPS) receiver; and a conventional laptop and/or a palmtop receiver or other electric apparatus including a radiophone transceiver. The terminal device may refer to an access terminal, the User Equipment (UE), a user unit, a user station, a mobile station, a mobile, a remote station, a remote terminal, a mobile device, a user terminal, a terminal, a wireless communication device, a user agent or a user apparatus. The access terminal may be a cellular phone, a cordless phone, a Session Initiation Protocol (SIP) phone, a Wireless Local Loop (WLL) station, the personal digital assistant (PDA), a handheld device with wireless communication function, a computing device or other processing devices connected to wireless modems, the in-vehicle device, the wearable device, a terminal device in 5G network or a terminal device in the future evolved PLMN, etc.

Optionally, Device to Device (D2D) communication may be performed between the terminal devices 120. In the present application, a signal or a channel transmitted by the D2D communication may be referred to as a sideline signal or a sideline channel, and a transmission opportunity for transmitting the sideline signal or the sideline channel may be referred to as a sideline transmission opportunity.

Optionally, the 5G system or the 5G network may also be referred to as a New Radio (NR) system or a NR network.

FIG. 1 exemplarily shows one network device and two terminal devices. Optionally, the communication system 100 may include a plurality of network devices and the coverage area of each network device may include other numbers of terminal devices, which is not limited in the embodiments of the present application.

Optionally, the communication system 100 may also include other network entity such as a network controller and a mobility management entity, which is not limited in the embodiments of the present application.

It should be understood that the device with a communication function in the network/system in the embodiments of the present application may be referred to as a communication device. Taking the communication system 100 shown in FIG. 1 as an example, the communication device may include the network device 110 and the terminal device 120 with the communication function. The network device 110 and the terminal device 120 may be the specific devices described above, which will not be described here again. The communication device may also include other device in the communication system 100, such as the network controller, the mobility management entity and other network entities, which is not limited in the embodiments of the present application.

As shown in FIG. 2, an optional processing flow of a device discovery method provided in the embodiments of the present application includes the following steps.

In step S201, a terminal device sends a target sequence on a first time-frequency resource via a first antenna port, where the target sequence is used for implementing D2D discovery.

In some embodiments, the target sequence is one sequence in a first sequence group; the first sequence group may include more than two sequences, and each sequence has auto-correlation and cross-correlation attributes. In a specific implementation, the sequences in the first sequence group may be pseudo-random sequences such as M, m, and Gold sequences; the sequences in the first sequence group may also be orthogonal sequences such as Z-C sequences. The sequences in the first sequence group may be identified by using, for example, 1, 2, 3...N; where 1 represents 1^{st} sequence in the sequence group, 2 represents a 2^{nd} sequence in the sequence group, 3 represents a 3^{rd} sequence in the sequence group, and so on.

In some embodiments, when the terminal device sends the target sequence on the first time-frequency resource via the first antenna port, the target sequence is used as a discovery signal; and if the target sequence can be detected by other terminal device, it means that the terminal device is successfully discovered by other terminal device.

The first antenna port is one of two antenna ports included in the terminal device and is used for sending signal; another antenna port included in the terminal device is a second antenna port used for receiving signal.

In step S202, while sending the target sequence, the terminal device detects a first sequence on the first time-frequency resource via the second antenna port.

In some embodiments, the first sequence and the target sequence are both sequences having autocorrelation and cross-correlation attributes in the first sequence group. The terminal device uses two different antenna ports to send the target sequence and detect the first sequence respectively on the same time-frequency resource, thereby realizing D2D communication using full-duplex technology.

In the embodiments of the present application, when using the full-duplex technology for the D2D communication, since the target sequence sent by the terminal device is known, when the terminal device eliminates an interference generated by sending signals, it only needs to eliminate the interference generated by this known and limited one signal, that is, it only needs to eliminate the interference generated by the target sequence. Therefore, in a D2D terminal device, there is no need to set a feedback loop between the first antenna port and the second antenna port for real-time eliminating the interference generated by the signal sent by the D2D terminal device. In a specific implementation, a set of models for receiving signals under a specific strong interference may be preset. When the D2D terminal device starts to send the target sequence, a receiver of the D2D terminal device only needs to select the model for receiving signals corresponding to the target sequence, then the interference generated by sending the target sequence by the D2D terminal device may be eliminated. In this way, the complexity of a receiver design of the full-duplex technology is greatly reduced.

Before executing step S201 in the device discovery method provided in the embodiments of the present application, the method may further include the following steps.

In step S200, the terminal device determines the target sequence.

In some embodiments, the terminal device first periodically detects a sequence on a second time-frequency resource; in a specific implementation, the terminal device performs autocorrelation on each sequence in the first sequence group, so as to determine at least one sequence in the first sequence group that is not used as the discovery signal by other D2D terminal device, that is, at least one sequence that is not detected (found). The sequence that is not detected may be referred to as a second sequence.

Then, the terminal device selects one sequence from the at least one sequence that is not detected as a sequence to be sent. In an optional embodiment, the terminal device randomly selects one sequence from the at least one second sequence that is not detected as the sequence to be sent. After determining the sequence to be sent, the terminal device determines the target sequence based on the determined sequence to be sent.

In a specific implementation, one or several moments on the first time-frequency resource for sending the discovery signal are selected as monitoring moments; at the monitoring moments, the terminal device only detects the sequences sent from other terminal device(s), and the terminal device itself does not send the sequence. By detecting the sequences sent from other terminal device(s), the terminal device can avoid that a plurality of terminal devices use the same sequence. When the terminal device and other terminal device use the same sequence, the terminal device may regard the received sequence of other terminal device as the sequence sent by the terminal device itself, and eliminate it as a self-interference. If the sequence that is the same as the sequence to be sent determined by the terminal device itself is detected (found) at the monitoring moment by the terminal device, the terminal device re-selects one sequence that has not been used as the sequence to be sent at a next moment; and the above detection procedure is repeated until the sequence that is the same as the sequence to be sent determined by the terminal device itself is not detected at the monitoring moment. If the sequence that is the same as the sequence to be sent determined by the terminal device itself is not detected at the monitoring moment by the terminal device, the terminal device determines the sequence to be sent as the target sequence, and sends the target sequence as the sending signal. The first time-frequency resource and the second time-frequency resource are different time-frequency resources.

Since D2D discovery is performed in a duplex mode, efficiency of terminal device discovery can be improved and a problem of "hidden node" can be avoided. For example, a terminal device A is not allocated with one time slot, and a terminal device B sends the discovery signal on this time slot; for the terminal device A, the terminal device B is the hidden node.

In other embodiments, the terminal device firstly detects sequences in a second sequence group according to a positive order of the sequences in the second sequence group; and when M sequences are not detected (found) continuously, the first one sequence (the 1^{st} sequence) not detected is determined as the sequence to be sent, M being a positive integer. The sequences in the second sequence group are the same as those in the first sequence group, and a sequence ranking in the second sequence group is the same as or different from that in the first sequence group. For example, the first sequence group is {1, 2, 3...Y}, and the first sequence group includes Y sequences; then, the second sequence group also includes the same Y sequences, but the Y sequences are in different ranking. The second sequence group may be an original arrangement of the first sequence group, that is, the second sequence group is also {1, 2, 3...Y}; the second sequence group may also be a reverse arrangement of the first sequence group, that is, the second sequence group is {Y, Y-1, Y-2, Y-3... 2, 1}; the second sequence group may also be a disordered arrangement of the first sequence group, for example, the second sequence group is {7, 2, 9, Y...1}; and the second sequence group may also be a sequential cyclic shift arrangement of the first sequence group, for example, the second sequence group is {3, 4, 5...Y, 1, 2}.

In a specific implementation, the terminal device detects the sequences in the second sequence group sequentially according to the positive order of the sequences in the second sequence group on the second time-frequency resource; when M sequences are not detected (found) continuously, the first one sequence not detected is determined as the sequence to be sent, M being a positive integer. For example, the terminal device starts to detect from the first sequence in the second sequence group, and a (N-1)^{th} sequence is found, but a N^{th} sequence, a (N+1)^{th} sequence ... to a (N+M-1)^{th} sequence are not found, that is, starting from the N^{th} sequence, M sequences are not found; then the terminal device determines the N^{th} sequence as the sequence to be sent. If no sequence is found by the terminal device, the terminal device determines the first sequence in the second sequence group as the sequence to be sent. A value of M may be preset.

In some embodiments, the terminal device may detect the sequences in the second sequence group sequentially according to the positive order of the sequences in the second sequence group, and the terminal device may also detect the sequences in the second sequence group sequentially according to the positive order of the sequences in the second sequence group starting from an X^{th} sequence in the second sequence group. For example, the second sequence group includes Y sequences, and the terminal device detects the X^{th} sequence, a (X+1)^{th} sequence, a (X+2)^{th} sequence ... a Z^{th} sequence sequentially starting from the X^{th} sequence; if the X^{th} sequence to the Y^{th} sequence are not found by the terminal device, the terminal device continues to detect the first sequence, the second sequence, until the (X-1)^{th} sequence in the second sequence group; where the X^{th} sequence is an intermediate sequence except the first sequence and the last sequence in the second sequence group, and a value of X may be preset.

Since the terminal device detects the sequences in the second sequence group according to the positive order of the sequences in the second sequence group, the sequences used by the terminal device are continuously distributed, either starting from the first sequence, or starting from the X^{th} sequence. In this way, the terminal device does not need to detect all the sequences in the sequence group when detecting the sequences. If a P^{th} sequence is not found by the terminal device, the terminal device does not need to detect the sequence after the P^{th} sequence, which reduces the complexity of eliminating the self-interference by the terminal device.

Then, when M sequences are not found continuously, the terminal device determines the 1^{st} sequence not found as the sequence to be sent. After determining the sequence to be sent, the terminal device determines the target sequence based on the determined sequence to be sent.

In a specific implementation, after determining the sequence to be sent, the terminal device detects the sequence sent from other terminal device at each discovery moment on the first time-frequency resource used for sending the discovery signal. The terminal device may detect K sequence(s) before the determined sequence to be sent, and detect whether J sequence(s) after the determined sequence to be sent is used, so as to determine the target sequence; the terminal device may also only detect whether J sequence(s) after the determined sequence to be sent is used, so as to determine the target sequence.

Taking the sequence to be sent determined by the terminal device as a sequence L, when the terminal device detects K sequence(s) before the determined sequence to be sent, it detects the sequence(s) before the sequence to be sent according to a reverse order of the sequences in the second sequence group; when the K sequence(s) before the sequence to be sent is (all) found, the terminal device determines an L^{th} sequence as the target sequence; and when none of the K sequence(s) before the sequence to be sent is found, the terminal device determines a K^{th} sequence as the target sequence, where K is a positive integer. K is a preset positive integer. For example, the terminal device firstly detects an (L-1)^{th} sequence in the second sequence group; if the (L-1)^{th} sequence is found, the terminal device detects a (L-2)^{th} sequence; if the (L-2)^{th} sequence is found, the terminal device detects a (L-K)^{th} sequence; when the (L-1)^{th} sequence to the (L-K)^{th} sequence are all found, the terminal device determines that the L^{th} sequence is still the sequence to be sent. When none of the (L-1)^{th} sequence to the (L-K)^{th} sequence is found, the terminal device determines the (L-K)^{th} sequence as the sequence to be sent. By detecting the K sequence(s) before the determined sequence to be sent, it can avoid maintenance of the above procedure of determining the sequence to be sent or a strategy of determining the sequence to be sent when other terminal device leaves the D2D system. Moreover, when a plurality of terminal devices detect that one sequence is not used, and the plurality of terminal devices select the same sequence at the same time, the sequence may be used to identify the terminal device and serve as the discovery signal of the terminal device; if a certain terminal device changes the selected sequence, other terminal device may select an appropriate sequence in time.

For example, at a moment T, the sequences detected by the terminal device are sequences 1, 2, 4, 6, 7, 8; since the sequence 3 before the sequence 4 is vacant, and the sequence 5 before the sequence 6 is vacant; then at a moment T+1, the sequences change to 1, 2, 3, 5, 7, 8; at a moment T+2, the sequences change to 1, 2, 3, 4, 6, 8; at a time T+3, the sequences change to 1, 2, 3, 4, 5, 7; and at a moment T+4, the sequences change to 1, 2, 3, 4, 5, 6.

Through the above operation, the terminal device detects the sequence(s) after the sequence to be sent according to the positive order of the sequences in the second sequence group on the first time-frequency resource. When J sequence(s) after the sequence to be sent is not found, the terminal device determines the sequence to be sent as the target sequence, and J is a positive integer. For example, if the sequence to be detected determined by the terminal device is L, the terminal device continues to detect a sequence L+1; if the sequence L+1 is not found, the terminal device continues to detect a sequence L+2; if the sequence L+2 is not found, the terminal device continues to detect a sequence L+3, and so on, until a sequence L+J is not found; and the terminal device determines the sequence to be sent as the target sequence. A value of J is a preset value. In this way, the terminal device only needs to detect a preset number of the sequence(s) after the sequence to be sent, and does not need to detect all the sequences in the second sequence group, which reduces the complexity of eliminating the self-interference by the terminal device.

The terminal device firstly detects the sequences in the second sequence group sequentially according to the positive order of the sequences in the second sequence group, and when M sequences are not found continuously, the terminal device determines the 1^{st} sequence not found as the target sequence, where M is a positive integer.

When the terminal device sequentially detects the sequences in the second sequence group according to the order of the sequences in the second sequence group, the detection may be started from the first sequence in the second sequence group. The detection may also be started from any sequence in the second sequence group except the first sequence and the last sequence. For example, it is possible to start the detection from the X^{th} sequence in the second sequence group, and if none of the sequence from the X^{th} sequence to the last sequence in the second sequence group is found, then the detection is started from the first sequence in the second sequence group. The detection may also be started from the last sequence in the second sequence group. For example, it is possible to start the detection from the last sequence in the second sequence group, and if the last sequence is not found, it is continued to detect the first sequence in the second sequence group.

Since the terminal device detects the sequences in the second sequence group according to the positive order of the sequences in the second sequence group, the sequences used by the terminal device are continuously distributed, they are continuously distributed either starting from the first sequence, or starting from the X^{th} sequence. In this way, the terminal device does not need to detect all the sequences in the sequence group when detecting the sequences. If the P^{th} sequence is not found by the terminal device, the terminal device does not need to detect the sequence(s) after the P^{th} sequence, which reduces the complexity of eliminating self-interference by the terminal device.

Then, when M sequences are not found continuously, the terminal device determines the first one sequence that is not found as the sequence to be sent. After determining the sequence to be sent, the terminal device determines the target sequence based on the determined sequence to be sent.

In a specific implementation, after determining the sequence to be sent, the terminal device detects the sequence sent from other terminal device at each discovery moment on the first time-frequency resource that is used for sending the discovery signal. The terminal device may detect K sequence(s) before the determined sequence to be sent, and whether J sequence(s) after the determined sequence to be sent is used, so as to determine the target sequence; the terminal device may also only detect whether J sequence(s) after the determined sequence to be sent is used, so as to determine the target sequence.

For example, the sequence to be sent determined by the terminal device is the sequence L, and the second sequence group includes Z sequences, when the terminal device detects K sequence(s) before the determined sequence to be sent, it detects the sequence(s) after the sequence to be sent according to the positive order of the sequences in the second sequence group; when the K sequence(s) before the sequence to be sent is (all) found, the terminal device determines the K^{th} sequence after the sequence to be sent as the target sequence, where K is a positive integer. For example, the terminal device firstly detects a (L+1)^{th} sequence in the second sequence group; if the (L+1)^{th} sequence is found, the terminal device detects a (L+2)^{th} sequence; if the (L+2)^{th} sequence is found, the terminal device detects a (L+K)^{th} sequence, until the Z^{th} sequence is found; when the (L+1)^{th} sequence to the Z^{th} sequence are all found, the terminal device determines that the L^{th} sequence is still the sequence to be sent, Z-L=K. When none of the (L+1)^{th} sequence to the Z^{th} sequence is found, the terminal device determines the Z^{th} sequence as the sequence to be sent. By detecting the K sequence(s) after the determined sequence to be sent, it can avoid the maintenance of the above procedure of determining the sequence to be sent or a strategy of determining the sequence to be sent when other terminal device leaves the D2D system. Moreover, when a plurality of terminal devices detect that one sequence is not used, and a plurality of terminal devices select the same sequence at the same time, the sequence may be used to identify the terminal device and serve as the discovery signal of the terminal device; if a certain terminal device changes the selected sequence, other terminal device may select an appropriate sequence in time.

For example, at the moment T, the sequences detected by the terminal device are sequences 8, 7, 6, 4, 2, 1; since the sequence 5 after the sequence 4 is vacant, and the sequence 3 after the sequence 2 is vacant; then at the moment T+1, the sequences change to 8, 7, 6, 5, 3, 1; at the moment T+2, the sequences change to 8, 7, 6, 5, 4, 2; at the moment T+3, the sequences change to 8, 7, 6, 5, 4, 3.

Through the above operation, the terminal device detects the sequence(s) after the sequence to be sent according to a reverse order of the sequences in the first sequence group on the first time-frequency resource. When J sequence(s) before the sequence to be sent is not found, the terminal device determines the sequence to be sent as the target sequence, where J is a preset positive integer. For example, if a sequence to be detected determined by the terminal device is L, the terminal device continues to detect a sequence L-1; if the sequence L-1 is not found, the terminal device continues to detect a sequence L-2; if the sequence L-2 is not found, the terminal device continues to a sequence L-3, and so on, until a sequence L-J is not found; the terminal device determines the sequence to be sent as the target sequence. The value of J is a preset value. In this way, the terminal device only needs to detect a preset number of the sequences after the sequence to be sent, such as detecting (K+J) sequences, and does not need to detect all the sequences in the second sequence group, which reduces the complexity of eliminating self-interference by the terminal device.

The target sequence determined in the above individual embodiments is used for the discovery signal sent by the terminal device, and used to be discovered by other terminal device. Before sending data, the terminal device needs to reserve a channel to determine a channel resource used by the terminal device to send the data. In the embodiments of the present application, the terminal device may use the target sequence serving as the discovery signal as a reservation signal used for reserving the channel, that is, the target sequence is the discovery signal and the reservation signal of one terminal device. A processing flow of reserving the channel by the terminal device is described below.

After the terminal device executes step S201, as shown in FIG. 3, the processing flow of reserving the channel by the terminal device includes the following steps.

In step S301, the terminal device detects sequence(s) before the target sequence according to a positive order of sequences in a second sequence group on a third time-frequency resource.

In a specific implementation, if the terminal device determines that the target sequence is a sequence L, the terminal device reserves the channel when there is data to be sent. The terminal device detects all sequence(s) from a sequence 1 to a sequence L-1 in the second sequence group.

In the embodiments of the present application, the first time-frequency resource is orthogonal to the third time-frequency resource.

In step S302, when the sequence(s) before the target sequence is (all) found, the terminal device sends the target sequence on the third time-frequency resource.

In some embodiments, when all the sequence(s) between the sequence 1 and the sequence L-1 can be detected (found) by the terminal device, the terminal device determines that the target sequence may be used as the reservation signal for the terminal device to reserve the channel, then the terminal device sends the target sequence on the third time-frequency resource to indicate that the terminal device has a demand of reserving the channel.

In other embodiments, when K sequence(s) between the sequence 1 and the sequence L-1 cannot be detected (found) by the terminal device, the terminal device needs to re-determine the target sequence. The processing procedure of re-determining the target sequence is the same as the above processing procedure of determining the target sequence by the terminal device in step S200, which is not elaborated here.

In step S303, while sending the target sequence, the terminal device detects N sequences according to the positive order of the sequences in the second sequence group; N is a positive integer.

In a specific implementation, if the target sequence is the sequence L, the terminal device starts to detect from the first sequence in the second sequence group until a sequence L+J, where J is a preset positive integer, and the value of J is the same as the value in step S200. When P sequence(s) before the target sequence is found by the terminal device, the terminal device determines that a (P+1)^{th} channel resource is used for sending the data; P is a preset positive integer. It should be understood that the channel for sending the data is divided into a channel 1, a channel 2, a channel 3, ..., a channel P, a channel P+1, ..., a channel Q, each found sequence occupies one channel. If the P sequences before the target sequence are found by the terminal device, the P sequences have occupied the channel 1, the channel 2 to the channel P, respectively, then the terminal device determines the channel P+1 as the channel for sending the data. In this way, the terminal device can successfully reserve the channel for sending the data through only one channel reservation, which improves efficiency of the channel reservation and channel allocation. Since the terminal device detects the sequence sent by other terminal device while sending the target sequence, that is, while sending the reservation signal, it can avoid possible conflict and waste of resources caused by monitoring the channel between the D2D devices.

It should be noted that in the embodiments of the present application, the terminal device may be a D2D terminal device.

It should be understood that in various method embodiments of the present application, the sizes of the serial numbers of the above-mentioned procedures do not mean an execution order. The execution order of each procedure should be determined by its function and internal logic, and should not constitute any limitation to an executing procedure of the embodiments of the present application.

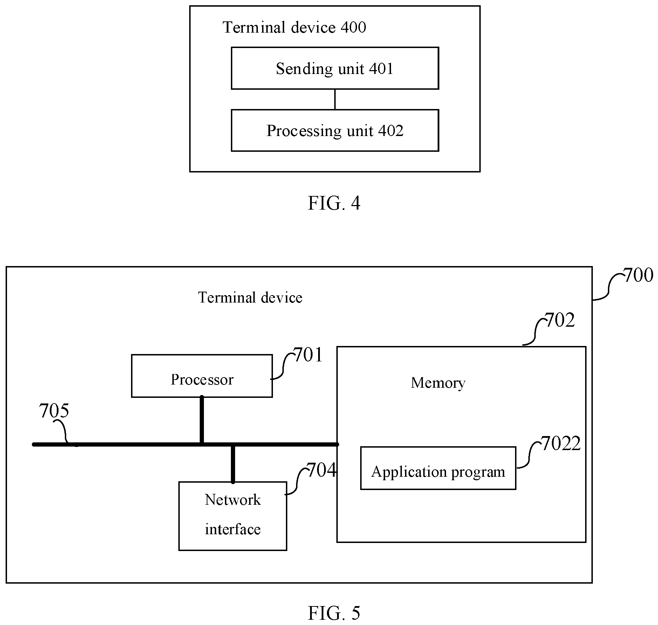

In order to implement the above-described device discovery method, the embodiments of the present application provide a terminal device. As shown in FIG. 4, a composition structure of the terminal device 400 includes:
a sending unit 401, configured to send a target sequence on a first time-frequency resource via a first antenna port, where the target sequence is used for implementing Device to Device (D2D) discovery; and
a processing unit 402, configured to, while sending the target sequence, detect a first sequence on the first time-frequency resource via a second antenna port, where the first sequence and the target sequence are sequences having autocorrelation and cross-correlation attributes in a first sequence group.

In some embodiment, the processing unit 402 is further configured to determine the target sequence.

In some embodiments, the processing unit 402 is further configured to determine at least one second sequence not used in the first sequence group on a second time-frequency resource; and
select one sequence in the at least one second sequence as a sequence to be sent.

In some embodiments, the processing unit 402 is further configured to detect a sequence on the first time-frequency resource; and
when the detected sequence is different from the sequence to be sent, determine the sequence to be sent as the target sequence.

In some embodiments, the processing unit 402 is further configured to detect sequences in a second sequence group sequentially according to a positive order of the sequences in the second sequence group; where the sequences in the second sequence group are the same as those in the first sequence group, and a sequence ranking in the second sequence group is the same as or different from that in the first sequence group; and
when M sequences are not found continuously, determine a first one sequence that is not found as the target sequence, where M is a positive integer.

In some embodiments, the processing unit 402 is further configured to detect sequence(s) before the sequence to be sent in the second sequence group according to a reverse order of the sequences in the second sequence group on the first time-frequency resource; and
when K sequence(s) before the sequence to be sent is not found, the terminal device determines a k^{th} sequence before the sequence to be sent as the sequence to be sent, where K is a positive integer.

In some embodiments, the processing unit 402 is further configured to detect sequence(s) after the sequence to be sent in the second sequence group according to the positive order of the sequences in the second sequence group on the first time-frequency resource; and
when J sequence(s) after the sequence to be sent is not found, the terminal device determines the sequence to be sent as the target sequence, where J is a positive integer.

In some embodiments, the processing unit 402 is further configured to detect sequence(s) before the target sequence according to a positive order of sequences in a second sequence group on a third time-frequency resource;
the sending unit is further configured to send the target sequence on the third time-frequency resource when the sequence(s) before the target sequence is found (are all found), where the target sequence is used for reserving a channel resource used by the terminal device to send data; and
the processing unit 401 is further configured to detect N sequence(s) according to the positive order of the sequences in the second sequence group while the sending unit 401 sends the target sequence, where N is a positive integer.

In some embodiments, the processing unit is configured to, when P sequence(s) before the target sequence is found, determine by the terminal device that a (P+1)^{th} channel resource is used for sending the data, where P is a positive integer.

In some embodiments, the first time-frequency resource is orthogonal to the third time-frequency resource.

The embodiments of the present application also provide a terminal device, including a processor and a memory for storing a computer program capable of running on the processor, where the processor is configured to execute steps of the device discovery method executed by the above terminal device when running the computer program.

FIG. 5 is a schematic diagram of a hardware composition structure of a terminal device according to the embodiments of the present application. The terminal device 700 includes: at least one processor 701, a memory 702, and at least one network interface 704. Various components in the terminal device 700 are coupled together by means of a bus system 705. It should be understood that the bus system 705 is used to implement connection communication between these components. In addition to a data bus, the bus system 705 also includes a power bus, a control bus, and a status signal bus. However, for the sake of clear description, various buses are labeled as the bus system 705 in FIG. 5.

It should be understood that the memory 702 may be a volatile memory or a non-volatile memory, and may also include both the volatile memory and the non-volatile memory. The non-volatile memory may be a Read-Only Memory (ROM), a Programmable ROM (PROM), an Erasable PROM (EPROM), an Electrically EPROM (EEPROM), a ferromagnetic random access memory (FRAM), a flash memory, a magnetic surface memory, an optical disc or a Compact Disc Read-Only Memory (CD-ROM); the magnetic surface memory may be a magnetic disk memory or a magnetic tape memory. The non-volatile memory may be a Random Access Memory (RAM) which serves as an external cache. By way of exemplary but not restrictive description, many forms of RAM are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDR SDRAM), an Enhanced Synchronous Dynamic Random Access Memory (ESDRAM), a SyncLink Dynamic Random Access Memory (SLDRAM) and a Direct Rambus Random Access Memory (DR RAM). The memory 702 described in the embodiments of the present application is intended to include, but is not limited to these and any other suitable types of memories.

The memory 702 in the embodiments of the present application is used to store various types of data to support the operation of the terminal device 700. Examples of the data include: any computer program used to operate on the terminal device 700, such as an application program 7022. A program for implementing the method of the embodiments of the present application may be included in the application program 7022.

The method disclosed in the above embodiments of the present application may be applied to the processor 701 or implemented by the processor 701. The processor 701 may be an integrated circuit chip with signal processing capabilities. In an implementation procedure, each step of the above method may be completed by integrated logic circuits of hardware or instructions in the form of software in the processor 701. The above processor 701 may be a general-purpose processor, a Digital Signal Processor (DSP), or other programmable logic devices, discrete gate or transistor logic devices, discrete hardware components, etc. The processor 701 may implement or execute each method, step, and logical block diagram disclosed in the embodiments of the present application. The general-purpose processor may be a microprocessor or any conventional processor or the like. The steps of the method disclosed in combination with the embodiments of the present application may be directly executed and completed by a hardware decoding processor, or by a combination of the hardware and the software modules in the decoding processor. The software module may be located in a storage medium. The storage medium is located in the memory 702, and the processor 701 reads information in the memory 702 and completes the steps of the above method in combination with its hardware.

In an exemplary embodiment, the terminal device 700 may be implemented by one or more Application Specific Integrated Circuits (ASICs), DSPs, Programmable Logic Devices (PLDs), Complex Programmable Logic Devices (CPLDs), FPGAs, general-purpose processors, controllers, MCUs, MPUs, or other electronic components for performing the foregoing method.

The embodiments of the present application also provide a storage medium for storing the computer program.

Optionally, the storage medium may be applied to the terminal device in the embodiments of the present application, and the computer program enables a computer to execute the corresponding procedure in each method of the embodiments of the present application, which will not be described here again for brevity.

The present application is described with reference to flowcharts and/or block diagrams of the method, the device (system), and the computer program product according to the embodiments of the present application. It should be understood that each flow and/or block in the flowcharts and/or block diagrams, and a combination of the flow and/or the blocks in the flowcharts and/or block diagrams may be implemented by computer program instructions. These computer program instructions may be provided to the processor of a general-purpose computer, a special-purpose computer, an embedded processor, or other programmable data processing device to generate a machine, so that instructions executed by the processor of the computer or other programmable data processing device generate means for implementing functions specified in one or more flow in the flowcharts and/or one or more blocks in the block diagrams.

These computer program instructions may also be stored in a computer-readable memory capable of guiding a computer or other programmable data processing device to work in a specific manner, so that the instructions stored in the computer-readable memory generate a manufacturing product including an instruction apparatus, and the instruction apparatus implements the functions specified in one or more flow in the flowcharts and/or one or more blocks in the block diagrams.

These computer program instructions may also be loaded on a computer or other programmable data processing device, so that a series of operating steps are executed on the computer or other programmable device to generate computer-implemented processing. Thus, the instructions executed on the computer or other programmable device provide steps for implementing the functions specified in one or more flow in the flowcharts and/or one or more blocks in the block diagrams.

The above contents are only the preferred embodiments of the present application, and are not used to limit the scope of protection of the present application. Any modification, equivalent replacement and improvement made within the spirit and principle of the present application shall be included in the scope of protection of the present application.

## Claims

1. A device discovery method, comprising:
sending, by a terminal device, a target sequence on a first time-frequency resource via a first antenna port, wherein the target sequence is used for implementing Device to Device (D2D) discovery; and
detecting, by the terminal device, a first sequence on the first time-frequency resource via a second antenna port while sending the target sequence, wherein the first sequence and the target sequence are sequences having autocorrelation and cross-correlation attributes in a first sequence group.

2. The method according to claim 1, wherein the method further comprises:
determining, by the terminal device, the target sequence.

3. The method according to claim 2, wherein determining, by the terminal device, the target sequence comprises:
determining, by the terminal device, at least one second sequence not used in the first sequence group on a second time-frequency resource; and
selecting, by the terminal device, one sequence from the at least one second sequence as a sequence to be sent.

4. The method according to claim 3, wherein determining, by the terminal device, the target sequence comprises:
detecting, by the terminal device, a sequence on the first time-frequency resource; and
when a detected sequence is different from the sequence to be sent, determining the sequence to be sent as the target sequence.

5. The method according to claim 2, wherein determining, by the terminal device, the target sequence comprises:
detecting, by the terminal device, sequences in a second sequence group sequentially according to a positive order of the sequences in the second sequence group; wherein the sequences in the second sequence group are the same as those in the first sequence group, and sequence ranking in the second sequence group is the same as or different from that in the first sequence group; and
when M sequences are not found continuously, determining a first one sequence not found as the sequence to be sent, wherein M is a positive integer.

6. The method according to claim 5, wherein determining, by the terminal device, the target sequence comprises:
detecting, by the terminal device, the sequences before the sequence to be sent in the second sequence group according to a reverse order of the sequences in the second sequence group on the first time-frequency resource; and
when K sequence before the sequence to be sent is not found, determining, by the terminal device, a K^{th} sequence before the sequence to be sent as the sequence to be sent, wherein K is a positive integer.

7. The method according to claim 5 or claim 6, wherein determining, by the terminal device, the target sequence comprises:
detecting, by the terminal device, the sequence after the sequence to be sent in the second sequence group according to the positive order of the sequences in the second sequence group on the first time-frequency resource; and
when J sequence after the sequence to be sent is not found, determining, by the terminal device, the sequence to be sent as the target sequence, wherein J is a positive integer.

8. The method according to any one of claims 1 to 7, wherein the method further comprises:
detecting, by the terminal device, sequences before the target sequence according to a positive order of sequences in a second sequence group on a third time-frequency resource;
when the sequences before the target sequence are all found, sending, by the terminal device, the target sequence on the third time-frequency resource, wherein the target sequence is used for reserving a channel resource used by the terminal device for sending data; and
detecting, by the terminal device, N sequences according to the positive order of sequences in the second sequence group while sending the target sequence, wherein N is a positive integer.

9. The method according to claim 8, wherein when P sequence before the target sequence is found by the terminal device, the terminal device determines a (P+1)^{th} channel resource to send the data, wherein P is a positive integer.

10. The method according to claim 8, wherein the first time-frequency resource is orthogonal to the third time-frequency resource.

11. A terminal device, comprising:
a sending unit, configured to send a target sequence on a first time-frequency resource via a first antenna port, wherein the target sequence is used for implementing Device to Device (D2D) discovery; and
a processing unit, configured to detect a first sequence on the first time-frequency resource via a second antenna port while sending the target sequence, wherein the first sequence and the target sequence are sequences having autocorrelation and cross-correlation attributes in a first sequence group.

12. The terminal device according to claim 11, wherein the processing unit is further configured to determine the target sequence.

13. The terminal device according to claim 12, wherein the processing unit is further configured to determine at least one second sequence not used in the first sequence group on a second time-frequency resource; and
select one sequence from the at least one second sequence as a sequence to be sent.

14. The terminal device according to claim 13, wherein the processing unit is further configured to detect a sequence on the first time-frequency resource; and
when a detected sequence is different from the sequence to be sent, determine the sequence to be sent as the target sequence.

15. The terminal device according to claim 12, wherein the processing unit is further configured to detect sequences in a second sequence group sequentially according to a positive order of the sequences in the second sequence group; wherein the sequences in the second sequence group are the same as those in the first sequence group, and sequence ranking in the second sequence group is the same as or different from that in the first sequence group; and
when M sequences are not found continuously, determine a first one sequence not found as the target sequence, wherein M is a positive integer.

16. The terminal device according to claim 15, wherein the processing unit is further configured to detect the sequences before the sequence to be sent in the second sequence group according to a reverse order of the sequences in the second sequence group on the first time-frequency resource; and
when K sequence before the sequence to be sent is not found, determine by the terminal device a K^{th} sequence before the sequence to be sent as the sequence to be sent, wherein K is a positive integer.

17. The terminal device according to claim 15 or claim 16, wherein the processing unit is further configured to detect the sequence after the sequence to be sent in the second sequence group according to the positive order of the sequences in the second sequence group on the first time-frequency resource; and
when J sequence after the sequence to be sent is not found, determine by the terminal device the sequence to be sent as the target sequence, wherein J is a positive integer.

18. The terminal device according to any one of claims 11 to 17, wherein the processing unit is further configured to detect sequences before the target sequence according to a positive order of sequences in a second sequence group on a third time-frequency resource;
the sending unit is further configured to, when the sequences before the target sequence are all found, send the target sequence on the third time-frequency resource, wherein the target sequence is used for reserving a channel resource used by the terminal device for sending data; and
the processing unit is further configured to detect N sequences according to the positive order of the sequences in the second sequence group while the sending unit sends the target sequence, wherein N is a positive integer.

19. The terminal device according to claim 18, wherein the processing unit is further configured to, when P sequence before the target sequence is found, determine by the terminal device a (P+1)^{th} channel resource for sending the data, wherein P is a positive integer.

20. The terminal device according to claim 18, wherein the first time-frequency resource is orthogonal to the third time-frequency resource.

21. A terminal device, comprising a processor and a memory for storing a computer program capable of running on the processor, wherein
the processor is configured to execute steps of the device discovery method according to any one of claims 1 to 10 when running the computer program.

22. A storage medium, storing an executable program, wherein when the executable program is executed by a processor, the device discovery method according to any one of claims 1 to 10 is implemented.
